# EUROPEAN PATENT APPLICATION

(11) **EP 4 099 421 A1**
(43) Date of publication of application: **07.12.2022**
(21) Application number: 21747132.5
(22) Date of filing: 29.01.2021
(51) Int. Cl.: H01M 4/02, H01M 4/32, H01M 4/36, H01M 4/52, H01M 4/62

(54) **ELECTRODE FOR SECONDARY BATTERIES, AND SECONDARY BATTERY**

(30) Priority: 31.01.2020 JP 2020015829
(71) Applicant: Kyocera Corporation, Kyoto-shi Kyoto 612-8501 (JP)
(72) Inventor: ONO, Kohei, Kyoto-shi, Kyoto 612-8501 (JP); OHKUMA, Takeshi, Kyoto-shi, Kyoto 612-8501 (JP)
(74) Representative: Viering, Jentschura & Partner mbB Patent- und Rechtsanwälte
(86) International application number: PCT/JP2021/003407
(87) International publication number: WO 2021/153790

(57) **Abstract**

An electrode for a secondary battery includes a plurality of active material particles. A length of each of the active material particles in a first direction along a thickness direction of the electrode is larger than a length of the active material particle in a second direction intersecting the first direction.

## Description

### Technical Field

The disclosed embodiment relates to an electrode for a secondary battery and a secondary battery.

### Background Art

To date, there is a known secondary battery including an electrode containing a plurality of active material particles.

### Citation List

### Patent Literature

Patent Document 1: JP 2004-119172 A
Patent Document 2: JP 2019-71301 A

### Summary of Invention

An electrode for a secondary battery according to an aspect of an embodiment includes a plurality of active material particles. A length of each of the active material particles in a first direction along a thickness direction of the electrode is larger than a length of the active material particle in a second direction intersecting the first direction.

### Brief Description of Drawings

FIG. 1 is a diagram illustrating an overview of a secondary battery according to an embodiment.
FIG. 2 is a diagram illustrating an example of a positive electrode structure.
FIG. 3 is a cross-sectional view taken along a line A-A in FIG. 2.
FIG. 4 is a cross-sectional view taken along a line B-B in FIG. 2.
FIG. 5 is an enlarged cross-sectional view of a positive electrode active material layer.
FIG. 6 is a diagram illustrating an example of connection between electrodes of the secondary battery according to the embodiment.
FIG. 7 is a cross-sectional view illustrating an example of a positive electrode according to a first variation of the embodiment.
FIG. 8A is an enlarged view illustrating, as an example, a positive electrode active material layer according to a variation.
FIG. 8B is an enlarged view illustrating, as an example, a positive electrode active material layer according to a variation.
FIG. 8C is an enlarged view illustrating, as an example, a positive electrode active material layer according to a variation.
FIG. 9A is an enlarged view illustrating, as an example, an active material particle according to a second variation of the embodiment.
FIG. 9B is an enlarged view illustrating, as an example, an active material particle according to a third variation of the embodiment.
FIG. 9C is an enlarged view illustrating, as an example, an active material particle according to a fourth variation of the embodiment.

### Description of Embodiment

An embodiment of an electrode for a secondary battery and a secondary battery disclosed in the present application will be described in detail below with reference to the accompanying drawings. Note that the present invention is not limited to the embodiment that will be described below.

### Embodiment

### Secondary Battery

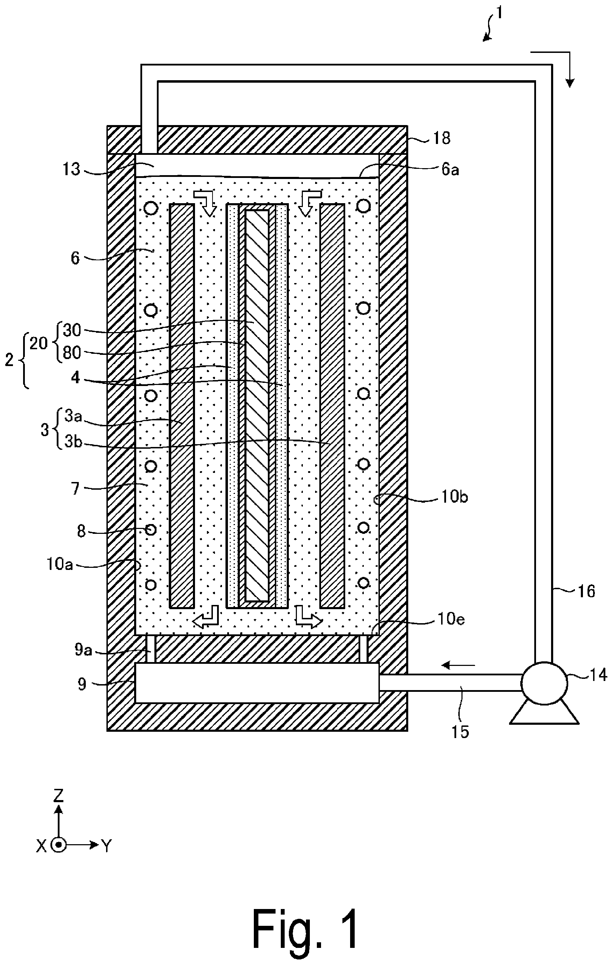

FIG. 1 is a diagram illustrating an overview of a secondary battery according to an embodiment. A secondary battery 1 illustrated in FIG. 1 includes a reaction unit 10 and a generation unit 9 that are housed in a casing 19, and a supply unit 14. The reaction unit 10 includes a positive electrode 2, negative electrodes 3, an electrolytic solution 6, and a powder 7. The secondary battery 1 is a device that is configured to cause the electrolytic solution 6 housed in the reaction unit 10 to flow by causing gas bubbles 8 generated by the generation unit 9 to float upwards in the electrolytic solution 6. The secondary battery 1 is also referred to as a flow battery. The positive electrode 2 and the negative electrodes 3 are examples of electrodes for a secondary battery. Additionally, the generation unit 9 is an example of a flow device. Note that the secondary battery 1 according to the embodiment will be described with the flow battery illustrated as an example; however, the application of the present disclosure is not limited to the flow battery. The present disclosure may be applied to, for example, a secondary battery such as a nickel hydrogen battery, a sodium sulfur battery, a lithium ion battery, or the like.

For the sake of clarity, FIG. 1 illustrates a three-dimensional orthogonal coordinate system including a Z-axis in which a vertically upward direction is a positive direction and a vertically downward direction is a negative direction. Such an orthogonal coordinate system may also be presented in other drawings used in the description below. In addition, configurations that are similar to those of the secondary battery 1 illustrated in FIG. 1 are assigned the same reference signs, and descriptions thereof are omitted or simplified.

The positive electrode 2 has one or a plurality of positive electrode structures 20. The positive electrode structure 20 includes a positive electrode active material layer 30 and a current collection member 80. Details of the positive electrode structure 20 will be described later.

Each of the negative electrodes 3 includes a negative electrode active material as a metal. For example, a metal plate of a material such as stainless steel, copper or the like, or a stainless steel or copper plate having a surface plated with nickel, tin, or zinc can be used as the negative electrode 3. Furthermore, a stainless steel or copper plate having a surface plated and then partially oxidized may also be used as the negative electrode 3.

The negative electrodes 3 include a negative electrode 3a and a negative electrode 3b that are disposed so as to face each other with the positive electrode 2 interposed therebetween. The positive electrode 2 and the negative electrodes 3 are disposed such that the negative electrode 3a, the positive electrode 2, and the negative electrode 3b are arranged in order along a Y-axis direction serving as a first direction defined along a thickness direction of the electrodes at predetermined intervals. By providing respective intervals between the positive electrode 2 and the negative electrodes 3 that are adjacent to each other in this manner, a flow passage for the electrolytic solution 6 between the positive electrode 2 and the negative electrodes 3 is ensured.

Further, the positive electrode 2 may include diaphragms 4. The diaphragms 4 are positioned so as to sandwich the positive electrode 2 in the thickness direction, that is, both sides in the Y-axis direction. The diaphragms 4 are composed of a material that allows the movement of ions included in the electrolytic solution 6. Specifically, examples of the material of the diaphragms 4 include an anionic conductive material so that the diaphragms 4 have hydroxide ion conductivity. Examples of the anionic conductive material include: gel-like anionic conductive materials having a three-dimensional structure such as an organic hydrogel; inorganic layered double hydroxides; or solid polymeric anionic conductive materials. The solid polymeric anionic conductive material includes, for example, a polymer and at least one compound selected from the group consisting of oxides, hydroxides, layered double hydroxides, sulfate compounds and phosphate compounds, the compound containing at least one element selected from Groups 1 to 17 of the periodic table.

The diaphragms 4 may be composed of a dense material and have a predetermined thickness so as to suppress transmission of metal ion complexes such as [Zn(OH)4]²⁻ with an ion radius larger than that of a hydroxide ion. The dense material may have, for example, a relative density being equal to or larger than 90% calculated by the Archimedes method. Also, the relative density may be larger than or equal to 92%. Further, a material having a relative density larger than or equal to 95% may be adopted. The predetermined thickness may be, for example, from 10 µm to 1000 µm, or may be from 50 µm to 500 µm.

In this case, during charging, the likelihood of zinc precipitated at the negative electrodes 3 growing as dendrites (needle-shaped crystals) and penetrating through the diaphragms 4 can be reduced. As a result, conduction between the negative electrodes 3 and the positive electrode 2 that mutually face each other can be reduced.

The electrolytic solution 6 is, for example, an alkaline aqueous solution containing a zinc species. The zinc species being in the electrolytic solution 6 is present as [Zn(OH)₄]²⁻ in the electrolytic solution 6. As the electrolytic solution 6, for example, an alkaline aqueous solution containing K⁺, and OH⁻and saturated with the zinc species can be used. Note that when the electrolytic solution 6 is prepared with the powder 7, which will be described below, a charge capacity can be increased. Here, as the alkaline aqueous solution, an aqueous potassium hydroxide solution of, for example, from 6 to 13 mol•dm⁻³, specifically, for example, from 6.5 mol•dm⁻³ to 12 mol•dm⁻³ can be used. Also, the electrolytic solution 6 obtained by dissolving ZnO in an aqueous potassium hydroxide solution of 1 dm³ at a proportion of, for example, from 0.6 mol to 2.4 mol can be used. In addition, an alkali metal such as lithium, sodium or the like may be added as a hydroxide for the purpose of suppressing oxygen generation. As an alkali metal hydroxide, for example, lithium hydroxide, or sodium hydroxide can be added. Furthermore, the electrolytic solution 6 may contain a thickener such as carboxymethyl cellulose (CMC), a surfactant, or the like.

The electrolytic solution 6 may also contain the powder 7. The powder 7 may also contain zinc, for example. Specifically, examples of the powder 7 include zinc oxide, zinc hydroxide, or the like processed or produced in a powder form. The powder 7 is readily dissolved in the alkaline aqueous solution. However, the powder 7 may be dispersed or suspended without being dissolved in the electrolytic solution 6 saturated with the zinc species. The powder 7 may also be precipitated, for example. When the electrolytic solution 6 is left to stand for an extended period of time, most of the powder 7 precipitates in the electrolytic solution 6, for example. However, when convection or the like is made to occur in the electrolytic solution 6, some of the precipitated powder 7 can be dispersed or suspended in the electrolytic solution 6. That is, the powder 7 is present in the electrolytic solution 6 in a mobile form. Here, "in a mobile form" does not mean that the powder 7 can move only within a localized space created between other regions of the powder 7 present in the surrounding area, but instead, means that the powder 7 moves to another position in the electrolytic solution 6, and thereby the powder 7 is exposed to the electrolytic solution 6 at a position other than the initial position. Furthermore, the expression "in a mobile form" also means that the powder 7 can move to the vicinity of both the diaphragms 4 sandwiching the positive electrode 2 and the negative electrodes 3, or means that the powder 7 can move almost anywhere in the electrolytic solution 6 present in the reaction unit 10. When [Zn(OH)₄]²⁻ that is the zinc species dissolved and present in the electrolytic solution 6 is consumed, the powder 7 mixed in the electrolytic solution 6 is dissolved until the zinc species present in the electrolytic solution 6 is saturated such that the powder 7 and the electrolytic solution 6 maintain equilibrium with each other.

The gas bubbles 8 are constituted by, for example, a gas that is inert to the positive electrode 2, the negative electrodes 3, and the electrolytic solution 6. Examples of such a gas include nitrogen gas, helium gas, neon gas, and argon gas. When the gas bubbles 8 of an inert gas are generated in the electrolytic solution 6, denaturation of the electrolytic solution 6 can be reduced. Furthermore, for example, deterioration of the electrolytic solution 6, which is an alkaline aqueous solution, containing the zinc species can be reduced, and the ionic conductivity of the electrolytic solution 6 can be highly maintained. Note that the gas may contain oxygen, and may be, for example, air.

The generation unit 9 is positioned below the reaction unit 10. The generation unit 9 is internally hollow so as to temporarily store a gas supplied from the supply unit 14. Furthermore, an inner bottom 10e of the reaction unit 10 is disposed so as to cover the hollow portion of the generation unit 9, and serves as a top plate of the generation unit 9. That is, the generation unit 9 is positioned on a bottom surface of the reaction unit 10 as a first container. The generation unit 9 is an example of a second container.

Furthermore, the inner bottom 10e includes a plurality of discharge ports 9a arranged along an X-axis direction defined as a second direction intersecting the thickness direction of the electrodes. In a plan view, the discharge ports 9a are individually disposed between an inner wall 10a and the negative electrode 3a and between the negative electrode 3b and an inner wall 10b. The generation unit 9 generates the gas bubbles 8 in the electrolytic solution 6 by discharging, from the discharge ports 9a, the gas supplied from the supply unit 14.

The discharge ports 9a have a diameter being, for example, equal to or larger than 5 µm and equal to or smaller than 500 µm, further, equal to or larger than 10 µm and equal to or smaller than 500 µm. Specifically, the discharge ports 9a may have a diameter of, for example, 0.1 mm. The diameter of the discharge ports 9a may be defined as such, and thus the problem of the electrolytic solution 6 and the powder 7 entering the hollow portion of the interior of the generation unit 9 from the discharge ports 9a can be reduced. In addition, a pressure loss suitable for formation of the gas bubbles 8 is imparted to the gas discharged from the discharge ports 9a.

Also, an interval (pitch) between the discharge ports 9a along the X-axis serving as the second direction is, for example, equal to or larger than 2.5 mm and equal to or smaller than 50 mm, and further, may be equal to or smaller than 10 mm. However, the discharge ports 9a are not limited in terms of size or interval as long as the discharge ports 9a are disposed such that the formed gas bubbles 8 can appropriately float upwards in the electrolytic solution 6.

The gas bubbles 8 formed from the gas supplied into the electrolytic solution 6 from the discharge ports 9a of the generation unit 9 float upwards in the electrolytic solution 6 at both end portions of the reaction unit 10 in the Y-axis direction. The gas floating upwards as the gas bubbles 8 in the electrolytic solution 6 disappears at a liquid surface 6a of the electrolytic solution 6, and forms a gas layer 13 between an upper plate 18 and a liquid surface 6a of the electrolytic solution 6.

Further, along with the above-described floating of the gas bubbles 8 in the upward direction, a rising liquid flow is generated in the electrolytic solution 6, and the electrolytic solution 6 flows upwards from below the reaction unit 10 at both end portions in the Y-axis direction. In addition, the electrolytic solution 6 flows from above to below between the negative electrode 3a and the positive electrode 2 and between the positive electrode 2 and the negative electrode 3b respectively.

Note that the discharge ports 9a may be positioned such that the gas bubbles 8 float upwards between the positive electrode 2 and the negative electrodes 3. In such a case, the electrolytic solution 6 flows from the upper side toward the lower side of the reaction unit 10 between the positive electrode 2 and the negative electrodes 3 where the gas bubbles 8 float upwards. Further, the electrolytic solution 6 flows from the upper side toward the lower side of the reaction unit 10 between the inner wall 10a and the negative electrode 3a and between the negative electrode 3b and the inner wall 10b.

The upper plate 18 and the casing 19 are made of a resin material having alkaline resistance and an insulating property, and examples of the resin material include polystyrene, polypropylene, polyethylene terephthalate, polytetrafluoroethylene, and polyvinyl chloride. The upper plate 18 and the casing 19 may be made of an identical material to each other or may be made of different materials from each other. Additionally, the generation unit 9 may be disposed inside the reaction unit 10.

The supply unit 14 supplies the gas recovered from the interior of the casing 19 through a pipe 16 to the generation unit 9 through a pipe 15. The supply unit 14 is, for example, a pump capable of transferring a gas. The pump capable of transferring a gas is, for example, a compressor, or a blower. When the supply unit 14 has high air-tightness, the secondary battery 1 is less likely to deteriorate charge and discharge performance, which may be caused by leakage of water vapor derived from the gas or the electrolytic solution 6 to the outside.

Here, an example of an electrode reaction in the secondary battery 1 will be described with a nickel zinc battery in which nickel hydroxide is used as the positive electrode active material exemplified. The reaction formulae at the positive electrode 2 and the negative electrodes 3 during charging are as follows.

Positive electrode: Ni(OH)₂ + OH⁻ → NiOOH + H₂O + e⁻

Negative electrode: [Zn(OH)₄]²⁻ + 2e⁻ → Zn + 4OH⁻

In general, there is a concern that, in association with these reactions, dendrites generated at the negative electrodes 3 may grow toward the positive electrode 2 side, and conduction may occur between the positive electrode 2 and the negative electrodes 3. As is clear from the reaction formulae, as zinc precipitates due to charging at the negative electrodes 3, the concentration of [Zn(OH)₄]²⁻ in the vicinity of the negative electrodes 3 decreases. Furthermore, the phenomenon of the decrease in the concentration of [Zn(OH)₄]²⁻ in the vicinity of the precipitated zinc is one of the causes of dendritic growth. In other words, the zinc species [Zn(OH)₄]²⁻ in the electrolytic solution 6 is maintained at a high concentration by replenishment of the [Zn(OH)₄]²⁻ in the electrolytic solution 6 consumed during charging. As a result, the growth of dendrites is reduced, and the likelihood of conduction between the positive electrode 2 and the negative electrodes 3 is reduced.

In the secondary battery 1, a gas is supplied from the discharge ports 9a of the generation unit 9 into the electrolytic solution 6 to generate the gas bubbles 8. The gas bubbles 8 float upwards in the electrolytic solution 6 from the inner bottom 10e of the reaction unit 10. Additionally, the electrolytic solution 6 flows in the reaction unit 10 as the gas bubbles 8 float upwards.

As a result, when [Zn(OH)₄]²⁻ in the electrolytic solution 6 is consumed by charging, the zinc in the powder 7 dissolves, whereby the electrolytic solution 6 containing a high concentration of [Zn(OH)₄]²⁻ is replenished in the vicinity of the negative electrodes 3. This enables [Zn(OH)₄]²⁻ in the electrolytic solution 6 to be maintained at a high concentration, and the likelihood of conduction between the positive electrode 2 and the negative electrodes 3 in association with the growth of dendrites can be reduced.

Note that examples of the powder 7 containing zinc include, in addition to zinc oxide and zinc hydroxide, metal zinc, calcium zincate, zinc carbonate, zinc sulfate, and zinc chloride, and in particular, zinc oxide and zinc hydroxide can be used.

Furthermore, at the negative electrodes 3, Zn is consumed through discharging, and [Zn(OH)₄]²⁻ is formed. However, in the electrolytic solution 6, [Zn(OH)₄]²⁻ has already been saturated, and thus the excess [Zn(OH)₄]²⁻precipitates as ZnO. At this time, the zinc consumed at the negative electrodes 3 is zinc that precipitates on the surface of the negative electrodes 3 during charging. Thus, unlike a case in which charging and discharging are repeated using a negative electrode originally containing a zinc species, so-called shape changing in which the surface shape of the negative electrodes 3 changes is less likely to occur. As a result, with the secondary battery 1 according to the embodiment, degradation over time of the negative electrodes 3 can be reduced. Note that depending on the state of the electrolytic solution 6, the zinc species precipitated from the excess [Zn(OH)₄]²⁻ is Zn(OH)₂ or a mixture of ZnO and Zn(OH)₂.

### Positive Electrode Structure

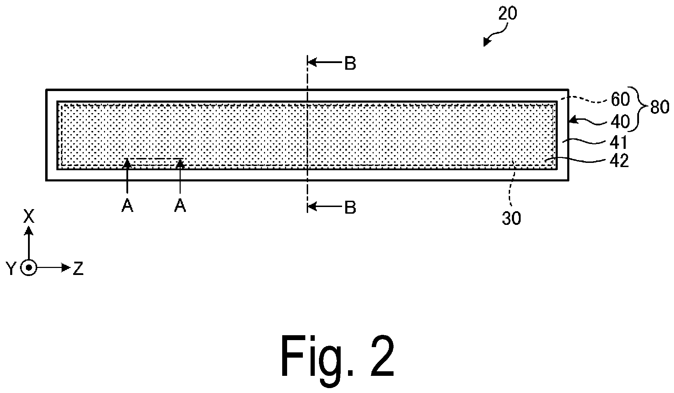

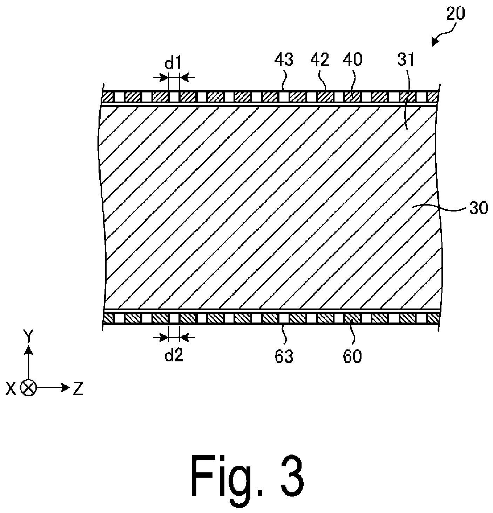

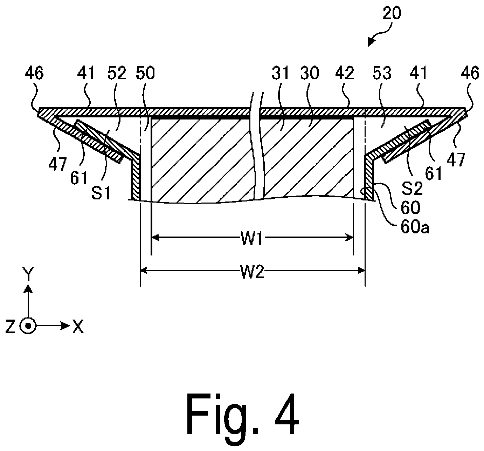

Next, a positive electrode structure 20 will be described using FIG. 2 to FIG. 4. FIG. 2 is a diagram illustrating an example of a positive electrode structure. FIG. 3 is a cross-sectional view taken along the line A-A in FIG. 2, and FIG. 4 is a cross-sectional view taken along the line B-B in FIG. 2.

The positive electrode structure 20 is a member having a box shape or a pocket shape. The positive electrode structure 20 includes the positive electrode active material layer 30 and the current collection member 80 that houses the positive electrode active material layer 30. The positive electrode active material layer 30 includes a plurality of active material particles 31. Details of the positive electrode active material layer 30 and the active material particles 31 will be described later.

The current collection member 80 is configured of a plate-shaped member made of, for example, a nickel metal or a nickel alloy, and having electrical conductivity. A metal material, the surface of which has been plated, may also be used as the current collection member 80. The current collection member 80 includes a first member 40 and a second member 60 facing each other in a thickness direction of the positive electrode active material layer 30. The positive electrode active material layer 30 is housed between the first member 40 and the second member 60.

As illustrated in FIG. 2, the first member 40 includes a communicating portion 42 and an anchoring portion 41. The communicating portion 42 is a portion that enables communication between the inside and outside of the positive electrode structure 20 in which the positive electrode active material layer 30 is housed, and allows the movement of the electrolytic solution 6 into and out of the positive electrode structure 20. As illustrated in FIG. 3, a plurality of through holes 43 that go through the inner surface and the outer surface of the first member 40 are provided in the communicating portion 42.

The anchoring portion 41 is a region that is provided for anchoring the first member 40 and the second member 60 at the peripheral edge of the first member 40. As illustrated in FIG. 4, the first member 40 may include bent portions 47 that are bent at both ends 46 in the X-axis direction, that is, in a width direction. Furthermore, the second member 60 may have side edge portions 61 at both end portions in the X-axis direction, that is, in the width direction. When the side edge portion 61 of the second member 60 is sandwiched between the anchoring portion 41 and the bent portion 47 of the first member 40, and the anchoring portion 41 and the bent portion 47 are compressed so as to sandwich the side edge portion 61 from the outside, the first member 40 and the second member 60 are anchored. Note that in FIG. 4, illustration of the through holes 43 included in the communicating portion 42 is omitted.

Here, a width W2 (see FIG. 4) in the X-axis direction of a housing portion 50 between the first member 40 and the second member 60 can be made to be, for example, 1 mm larger than a width W1 in the X-axis direction of the positive electrode active material layer 30. As described above, when the width W2 of the housing portion 50 is made to be larger than the width W1 of the positive electrode active material layer 30, the electrolytic solution 6 easily enters between the housing portion 50 and an inner surface 60a of the second member 60. As a result, the positive electrode active material layer 30 that is in direct contact with the electrolytic solution 6 increases in proportion, and the diffusion of the electrolytic solution 6 into the interior of the positive electrode active material layer 30 is further improved.

Although not illustrated, the first member 40 and the second member 60 can also be anchored in a longitudinal direction of the positive electrode structure 20 by a similar technique used for anchoring in a lateral direction. Alternatively, anchoring of the first member 40 and the second member 60 is not limited to the illustrated example, and may be implemented by welding, for example. In the first member 40 illustrated in the figure, each of the communicating portion 42 and the anchoring portion 41 is formed as a continuous portion, but other forms may be used. For example, through holes 63 may also be provided in the anchoring portion 41 such that a part or all of the anchoring portion 41 becomes a communicating portion 42 enabling the movement of the electrolytic solution 6.

Furthermore, the first member 40 and the second member 60 have gaps 52 and 53 at the end portions in the width direction of the positive electrode active material layer 30, specifically, at the outside of the housing portion 50. Thus, the electrolytic solution 6 (refer to FIG. 1) enters the gaps 52 and 53, whereby the positive electrode active material layer 30 in direct contact with the electrolytic solution 6 is further increased in proportion, and the number of diffusion starting points is increased. As a result, diffusion of the electrolytic solution 6 into the interior of the positive electrode active material layer 30 is further enhanced. Note that a configuration may also be adopted in which only one of the gaps 52 and 53 is present, or in which none of the gaps 52 and 53 are present.

Further, as illustrated in FIG. 3, the second member 60 includes a plurality of through holes 63 that go through the inner surface and the outer surface thereof. The plurality of through holes 63 can be disposed, for example, so as to face the plurality of through holes 43 respectively with the positive electrode active material layer 30 interposed therebetween.

Here, diameters d1 and d2 of the through holes 43 and 63 can be, for example, 30 µm or more and 300 µm or less, and can also be 100 µm or more and 200 µm or less. When the diameters d1 and d2 are smaller than 30 µm, for example, the electrolytic solution 6 is less likely to enter inside the through holes 43 and 63. On the other hand, when the diameters d1 and d2 exceed 300 µm, for example, the active material particles 31 and the other components constituting the positive electrode active material layer 30 tend to easily leak to the outside.

Note that in FIG. 3 and FIG. 4, the first member 40 and the second member 60 are illustrated as being spaced apart from the positive electrode active material layer 30, but the embodiment is not limited to such a configuration, and for example, each of the through holes 43 and 63 may protrude toward the positive electrode active material layer 30 side such that the first member 40 and the second member 60 are in contact with the positive electrode active material layer 30 respectively. The first member 40 and the second member 60 being in contact with the positive electrode active material layer 30 can facilitate movement of electric charges between the positive electrode active material layer 30 and the current collection member 80 through the electrolytic solution 6 (see FIG. 1).

### Positive Electrode Active Material Layer 30

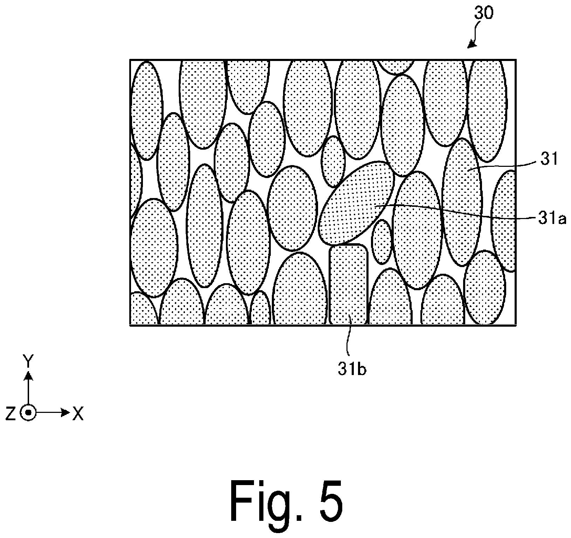

Next, the positive electrode active material layer 30 will be described using FIG. 5. FIG. 5 is an enlarged cross-sectional view of a positive electrode active material layer. FIG. 5 is a model diagram illustrating an enlarged cross section obtained by measuring the positive electrode active material layer 30 positioned in the cross section taken along the B-B line in FIG. 2 by using a scanning electron microscope (SEM). As illustrated in FIG. 5, the positive electrode active material layer 30 includes a plurality of active material particles 31.

The plurality of active material particles 31 are formed such that a length thereof in the Y-axis direction (first direction) along the thickness direction of the electrodes is larger than a length thereof in the X-axis direction (second direction) that intersects the Y-axis direction. Specifically, the active material particles 31 have a substantially elliptical cross section in which a major axis thereof is positioned along the Y-axis direction and a minor axis thereof is positioned along the X-axis direction. Thus, for example, compared with the positive electrode active material layer 30 that includes active material particles 31 having the same cross-sectional area as that of the active material particles 31 illustrated in FIG. 5 and having a substantially circular cross section, the internal resistance of the positive electrode active material layer 30 along the first direction due to a contact resistance generated between adjacent active material particles 31 is reduced. This can improve battery performance.

Further, the positive electrode active material layer 30 may be formed, for example, by extrusion-molding a slurry including the active material particles 31 in the Y-axis direction (first direction), and cutting the extrusion-molded slurry in a direction parallel to the X-axis direction (second direction). As a result, the major axes of the active material particles 31 are easily directed in the Y-axis direction (first direction) in which the extrusion molding is performed. Here, the length in the Y-axis direction (first direction) can be defined as the longest length among lengths of line segments each of which connects intersection points of the cross section of the active material particle 31 and a straight line parallel to the Y-axis direction (first direction). Also, the length in the X-axis direction (second direction) can be defined as the longest length among lengths of line segments each connecting intersection points of the cross section of the active material particle 31 and a straight line parallel to the X-axis direction (second direction).

The active material particles 31 can have an average dimension, for example, equal to or larger than 10 µm and equal to or smaller than 120 µm in the Y-axis direction (first direction). Also, the active material particles 31 can have an average dimension, for example, equal to or larger than 5 µm and equal to or smaller than 80 µm in the X-axis direction (second direction). Setting the average dimensions in the first direction and the second direction of the active material particles 31 to be within such ranges enables shape retainability of the positive electrode active material layer 30 to be easily ensured. Here, the average dimensions of the active material particles 31 can be calculated from results of observing the cross section of the positive electrode active material layer 30 by using the SEM and measuring a plurality (for example, 10 or more) of the active material particles 31.

Note that the active material particles 31 are only required to be positioned such that the length thereof in the first direction is larger than the length thereof in the second direction, and the shapes and arrangement of the active material particles 31 are not limited to those illustrated. For example, the positive electrode active material layer 30 may include an active material particle 31a obtained by positioning the major axis of the active material particle 31 having the substantially elliptical cross section so as to be tilted from the first direction. The positive electrode active material layer 30 may also include an active material particle 31b having a rectangular cross section. The positive electrode active material layer 30 may also include an active material particle (not illustrated) in which a length thereof in the first direction is smaller than a length thereof in the second direction. Further, the proportion of the number of the active material particles 31 in which the length thereof in the first direction is larger than the length thereof in the second direction with respect to the total number of the active material particles 31 included in the positive electrode active material layer 30 may be, for example, larger than or equal to 5%, larger than or equal to 10%, or larger than or equal to 25%. Furthermore, the proportion of the number of the active material particles 31 in which the length thereof in the first direction is larger than the length thereof in the second direction with respect to the total number of the active material particles 31 included in the positive electrode active material layer 30 may be, for example, equal to or larger than 50%, or equal to or larger than 75%. Note that the number of the active material particles 31 may be measured by, for example, observing a cross section of the positive electrode active material layer 30 with the SEM.

The active material particles 31 can contain, for example, a nickel compound as a main component. As the nickel compound, for example, nickel oxyhydroxide, nickel hydroxide, or the like can be used. Here, "containing a nickel compound as a main component" means that the nickel compound is the most abundant among the various components constituting the active material particles 31. Specifically, the active material particles 31 may contain, for example, 50 mass% or more of a nickel compound, in particular, 90 mass% or more of a nickel compound. The active material particles 31 may also contain a nickel metal.

In addition, the active material particles 31 may contain metal elements other than nickel. Among the metal elements contained in the active material particles 31, the content of the metal elements other than nickel can be equal to or smaller than 10 mol%, and furthermore, be equal to or smaller than 6 mol%. When the upper limit of the content of the metal elements other than nickel is implemented in this manner, the content of the nickel compound that significantly contributes to charging and discharging becomes relatively large, and the charge capacity can be improved.

Examples of metal elements other than nickel include magnesium, cadmium, zinc and the like. The active material particles 31 may also contain other metal elements, such as cobalt, for example. In addition, the active material particles 31 may not contain any metal elements other than nickel, that is, the content of metal elements other than nickel may be smaller than or equal to the detection limit. Note that the composition of the active material particles 31 can be measured using, for example, ICP composition analysis.

Furthermore, the active material particles 31 may contain, for example, a manganese compound or a cobalt compound as a main component. As the manganese compound, for example, manganese dioxide or the like can be used. As the cobalt compound, for example, cobalt hydroxide, cobalt oxyhydroxide, or the like can be used. Furthermore, the active material particles 31 may contain the cobalt compound serving as nickel hydroxide containing the cobalt compound.

The positive electrode active material layer 30 may also contain a binder. The binder is a binding material that binds active materials together, binds conductors together, and binds the active materials and the conductors together, the active materials and conductors being contained in the positive electrode active material layer 30, to contribute to the shape retainability of the positive electrode active material layer 30, and enhance adhesiveness with the current collection member 80. The binder may be a resin material having alkali resistance and an insulating property, and examples of the resin material include polytetrafluoroethylene (PTFE), polyvinyl chloride (PVA), polyvinylidene fluoride (PVDF) and the like.

Furthermore, the active material particles 31 may contain the electrolytic solution 6 (see FIG. 1) therein. When the electrolytic solution 6 is positioned inside the active material particles 31, the number of contact opportunities between the active material and the electrolytic solution 6 positioned inside the active material particles 31 increases. In the positive electrode active material layer 30 including such active material particles 31, the electrolytic solution 6 located inside and the electrolytic solution 6 located outside the active material particles 31 can come into contact with each other through small gaps in the active material particles 31. This causes ionic conductivity to be increased, and thus, improves the battery performance. Note that the electrolytic solution 6 located inside the active material particles 31 may be positioned in advance before molding of the positive electrode active material layer 30, and may also be positioned by immersing the molded positive electrode active material layer 30 in the electrolytic solution 6.

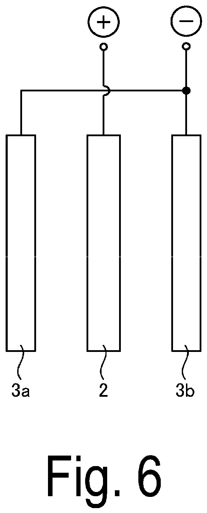

Next, connection between the electrodes in the secondary battery 1 will be described. FIG. 6 is a diagram illustrating an example of connection between the electrodes of the secondary battery according to the embodiment.

As illustrated in FIG. 6, the negative electrode 3a and the negative electrode 3b are connected in parallel. By connecting the negative electrodes 3 in parallel in this manner, each of the electrodes of the secondary battery 1 can be appropriately connected and used even when the total number of positive electrodes 2 differs from the total number of negative electrodes 3.

Additionally, as described above, the secondary battery 1 includes the negative electrodes 3a and 3b disposed so as to face each other with the positive electrode 2 interposed therebetween. In the secondary battery 1 in which the two negative electrodes 3a and 3b correspond to one positive electrode 2 in this manner, a current density per one negative electrode is reduced compared with a secondary battery in which the positive electrode 2 and the negative electrode 3 correspond to each other in a 1 : 1 relationship. Thus, with the secondary battery 1 according to the embodiment, the generation of dendrites at the negative electrodes 3a and 3b is further reduced, whereby the conduction between the negative electrodes 3a and 3b and the positive electrode 2 can be further reduced.

Note that, in the secondary battery 1 illustrated in FIG. 1, three electrodes in total, that is, two negative electrodes 3 and one positive electrode 2, are alternately disposed; however, the configuration is not limited to this. Five or more electrodes may be alternately disposed, or one positive electrode 2 and one negative electrodes 3 may be disposed. Furthermore, in the secondary battery 1 illustrated in FIG. 1, the negative electrodes 3 are individually present at both ends; however, the configuration is not limited to this. The positive electrodes 2 may be individually present at both ends. Furthermore, the same number of negative electrodes 3 and positive electrodes 2 may be alternately disposed such that the positive electrodes 2 are disposed at one end and the negative electrodes 3 are disposed at the other end.

### Variations

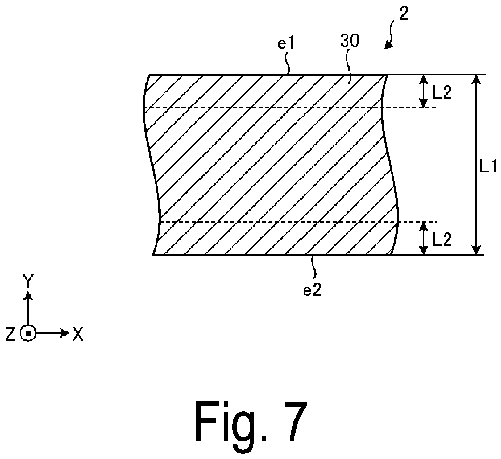

FIG. 7 is a cross-sectional view illustrating an example of a positive electrode according to a first variation of the embodiment. The content of zinc of the active material particles 31 in both end portions of the positive electrode 2 along the Y-axis direction (first direction) may be larger than the content of zinc of the active material particles 31 in the central portion in the first direction. Making the content of zinc different depending on a position in the positive electrode 2 along the first direction in this manner can reduce the likelihood of the positive electrode 2 cracking due to the expansion and contraction of the active material particles 31 associated with charging and discharging. In addition, the positive electrode 2 in which the content of zinc differs depending on a position in the positive electrode 2 along the first direction may be produced by laminating a plurality of layers of the active material particles 31 having different contents of zinc from each other along the first direction, for example. Note that both end portions along the Y-axis direction (first direction) here refer to portions where a length L2 from each of both ends e1 and e2 is within a range that satisfies a relation of L2 = 0.2 × L1 with respect to an entire length L1 in the first direction of the positive electrode active material layer 30 of the positive electrode 2. Furthermore, the content of zinc contained in the active material particles 31 can be determined by measuring, for example, the cross section of the positive electrode active material layer 30 by using a SEM with energy dispersive X-ray spectroscopy (SEM-EDX).

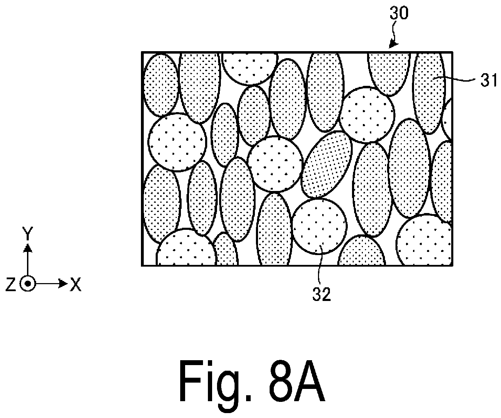

FIG. 8A to FIG. 8C are enlarged views illustrating, as examples, a positive electrode active material layer according to a variation. As illustrated in FIG. 8A, the positive electrode active material layer 30 may contain conductors 32. The conductors 32 enhance electrical conductivity between the active material particles 31 and the current collection member 80 (see FIG. 2), and reduce an energy loss that occurs during charging and discharging at the positive electrode 2. The conductors 32 are made of, for example, an electrically conductive material such as a carbon material, a metal material or the like. From the perspective of versatility, the conductors 32 are, for example, a carbon material. Examples of the carbon material include black lead, carbon black, graphite, and carbon felt. In addition, a nickel metal, for example, can be used as the metal material. Alternatively, the conductors 32 may be, for example, a cobalt metal, a manganese metal, or an alloy thereof.

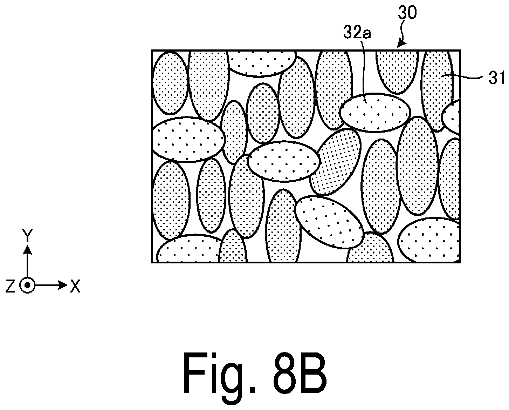

The conductor 32 can have any shape depending on the properties of the material, and examples of the shape include an ellipsoidal shape, a pillar shape, a scale-like shape or the like. The conductors 32 may be larger in cross-sectional diameter (equivalent circle diameter) than the active material particles 31, or may be smaller. Additionally, as illustrated in FIG. 8B, the positive electrode active material layer 30 may include a plurality of conductors 32a having a length in the Y-axis direction (first direction) smaller than a length in the X-axis direction (second direction). As described above, when the positive electrode active material layer 30 includes the plurality of conductors 32a, an internal resistance along the second direction of the positive electrode active material layer 30 is reduced. This can improve battery performance.

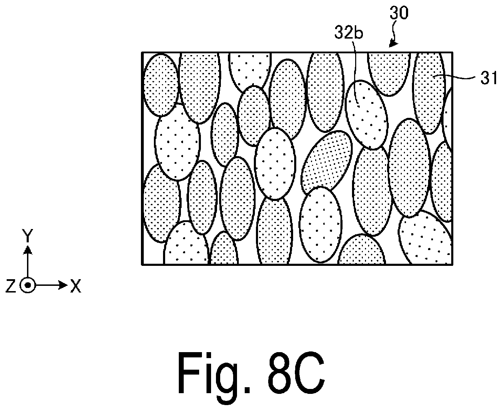

Additionally, as illustrated in FIG. 8C, the positive electrode active material layer 30 may include a plurality of conductors 32b having a length in the Y-axis direction (first direction) larger than a length in the X-axis direction (second direction). When the positive electrode active material layer 30 includes the plurality of conductors 32b in this manner, the internal resistance along the first direction of the positive electrode active material layer 30 is further reduced. This can improve battery performance.

The positive electrode active material layer 30 contains, for example, 50 mass% or more of the active material particles 31, particularly, 70 mass% or more of the active material particles 31. By determining the content of the active material particles 31 in this manner, the charge capacity of the positive electrode 2 can be increased even when the positive electrode active material layer 30 contains components other than the active material particles 31.

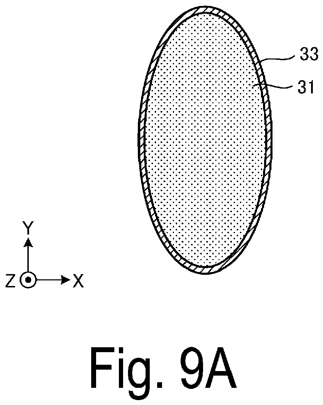

FIG. 9A to FIG. 9C are enlarged views illustrating, as examples, active material particles according to second to fourth variations of the embodiment. As illustrated in FIG. 9A, a coating film 33 having electrical conductivity and positioned on the surface of the active material particle 31 may be provided. The coating film 33 has a small electrical resistivity compared with the active material particles 31. The active material particles 31 are covered with the coating film 33 to further reduce the internal resistance of the positive electrode active material layer 30. This can improve battery performance.

The coating film 33 contains, for example, cobalt. Specifically, the coating film 33 can contain cobalt hydroxide, and cobalt oxyhydroxide. Additionally, the coating film 33 may contain a carbon material. Note that the coating film 33 may be positioned so as to cover the entire surface of the active material particles 31, or may be positioned so as to cover a part of the active material particles 31.

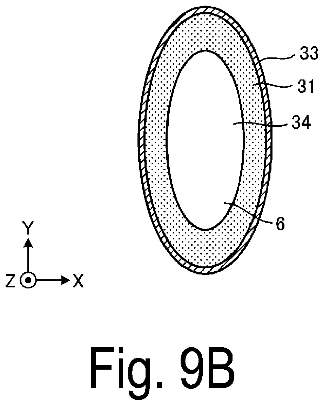

Additionally, as illustrated in FIG. 9B, the active material particles 31 may have a hollow portion 34. The hollow portion 34 is a space located inside each of the active material particles 31. The electrolytic solution 6 is positioned in the hollow portion 34, or the electrolytic solution 6 enters the hollow portion 34 from the outside of the active material particle 31. As for the active material particle 31 the inside of which is hollow, a contact area between the active material and the electrolytic solution 6 positioned inside the active material particle 31 increases. The positive electrode active material layer 30 including such an active material particle 31 improves battery performance due to an increase in ionic conductivity.

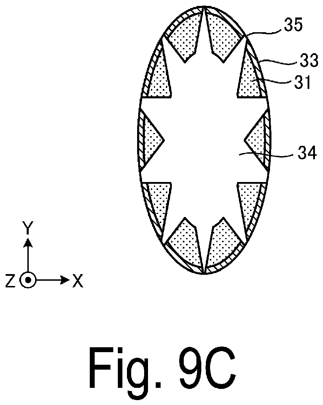

Additionally, as illustrated in FIG. 9C, the surface of the active material particle 31 may have a crack 35. The crack 35 is one or a plurality of openings having an irregular shape and positioned at the surface of the coating film 33 or the active material particle 31. The cracks 35 illustrated in FIG. 9C are in communication with each other through the hollow portion 34. Having the cracks 35 at the surface in this manner facilitates the movement of the electrolytic solution 6 through the cracks 35. Thus, the positive electrode active material layer 30 having the active material particle 31 such as that described above further improves battery performance due to an increase in ionic conductivity.

Note that, in FIG. 9, an example is illustrated in which the coating film 33 is positioned so as to cover the entire surface of the active material particle 31, but the coating film 33 is not limited thereto, and the coating film 33 may be positioned so as to cover a part of the active material particle 31. Additionally, in FIG. 9B, and FIG. 9C, the coating film 33 does not need to be positioned on the surface of the active material particle 31.

Furthermore, in FIG. 9C, the hollow portion 34 does not need to be positioned inside the active material particle 31. In such a case, the plurality of cracks 35 positioned at the surface of the active material particle 31 may be in communication with one another, or do not need to be in communication with one another.

Although an embodiment of the present disclosure has been described above, the present disclosure is not limited to the embodiment described above, and various modifications can be made without departing from the spirit thereof. For example, in the embodiment described above, an example has been described in which the positive electrode 2 includes the plurality of active material particles 31 having a length in the first direction larger than a length in the second direction; however, the configuration is not limited thereto. The negative electrodes 3 may include the plurality of active material particles 31 described above, or each of the positive electrode 2 and the negative electrodes 3 may include the plurality of active material particles 31 described above.

Additionally, in the embodiment described above, an aspect has been described in which the supply unit 14 that is an example of a flow device supplies a gas to the reaction unit 10 to cause the electrolytic solution 6 to flow; however, the embodiment is not limited thereto, and the electrolytic solution 6 recovered from the reaction unit 10 may be supplied to the reaction unit 10. Additionally, the secondary battery 1 does not need to include the flow device.

Moreover, in the embodiment described above, the diaphragms 4 have been described as being arranged at both sides of the positive electrode 2 in the thickness direction. However, the configuration is not limited thereto, and the diaphragms 4 may cover the positive electrode 2.

Further effects and variations can be readily derived by those skilled in the art. Thus, a wide variety of aspects of the present disclosure are not limited to the specific details and representative embodiments represented and described above. Accordingly, various changes are possible without departing from the spirit or scope of the general inventive concepts defined by the appended claims and their equivalents.

### Reference Signs List

1: Secondary battery
2: Positive electrode
3, 3a, 3b: Negative electrode
4: Diaphragm
6: Electrolytic solution
7: Powder
8: Gas bubble
9: Generation unit
9a: Discharge port
10: Reaction unit
14: Supply unit
18: Upper plate
19: Casing
20: Positive electrode structure
30: Positive electrode active material layer
31: Active material particle
32: Conductor
33: Coating film
34: Hollow portion
35: Crack
80: Current collection member

## Claims

1. An electrode for a secondary battery comprising:
a plurality of active material particles, wherein
a length of each active material particle in a first direction along a thickness direction of the electrode is larger than a length of the active material particle in a second direction intersecting the first direction.

2. The electrode for the secondary battery according to claim 1, wherein the plurality of active material particles are hollow inside.

3. The electrode for the secondary battery according to claim 1 or 2, wherein
the plurality of active material particles comprise a crack at a surface.

4. The electrode for the secondary battery according to claim 2 or 3, wherein
an electrolytic solution is contained inside the active material particles.

5. The electrode for the secondary battery according to any one of claims 2 to 4, wherein
the active material particles contain zinc.

6. The electrode for the secondary battery according to claim 5, wherein
a content of the zinc at both end portions of the electrode along the first direction is larger than a content of the zinc in a central portion of the electrode along the first direction.

7. The electrode for the secondary battery according to any one of claims 1 to 6, further comprising:
a plurality of conductors, wherein
a length of each conductor in the first direction is larger than a length of the conductor in the second direction.

8. The electrode for the secondary battery according to any one of claims 1 to 6, further comprising:
a plurality of conductors, wherein
a length of each conductor in the first direction is smaller than a length of the conductor in the second direction.

9. The electrode for the secondary battery according to any one of claims 1 to 8, further comprising:
a coating film, the coating film being electrically conductive and covering a surface of the active material particles.

10. A secondary battery comprising:
the electrode for the secondary battery according to any one of claims 1 to 9.
